# DEMANDE DE BREVET EUROPEEN

(11) **EP 4 549 928 A1**
(43) Date de publication de la demande: **07.05.2025**
(21) Numéro de dépôt: 24209344.1
(22) Date de dépôt: 29.10.2024
(51) Int. Cl.: G01N 29/02, G01N 29/24, G01N 29/036, G01N 29/22

(54) **SYSTÈME OPTO-MÉCANIQUE DE TRANSDUCTION POUR LA SPECTROMÉTRIE PHOTO-ACOUSTIQUE**

(30) Priorité: 30.10.2023 FR 2311816
(71) Demandeur: Commissariat à l'Energie Atomique et aux Energies Alternatives, 75015 Paris (FR)
(72) Inventeur: TRZPIL, Wioletta, 38054 Grenoble cedex 09 (FR); SANSA PERNA, Marc, 38054 Grenoble cedex 09 (FR)
(74) Mandataire: Hautier IP

(57) **Abrégé**

L'invention concerne un système opto-mécanique de transduction d'un déplacement en déphasage optique comprenant un capteur mécanique comprenant un élément senseur, l'élément senseur présentant une face supérieure s'étendant principalement dans un plan dit plan longitudinal lorsque le système est au repos, le capteur mécanique étant destiné à recevoir une onde acoustique pour mettre en vibration l'élément senseur à une fréquence de vibration. Le système comprend par ailleurs un détecteur optique apte à guider un rayonnement lumineux de façon sensiblement parallèle au plan longitudinal, le détecteur optique présentant un champ évanescent. La vibration de l'élément senseur modifie le champ évanescent du détecteur optique et l'élément senseur se déplace selon une direction dite direction transversale sensiblement perpendiculaire au plan longitudinal lorsqu'il est en vibration.

## Description

### DOMAINE TECHNIQUE

La présente invention concerne la détection opto-mécanique à l'aide de structures micromécaniques et/ou nanomécaniques résonantes. Elle trouve comme application particulièrement avantageuse la détection photo-acoustique, notamment pour la détection de gaz. Elle peut notamment être utilisée pour la spectrométrie photo-acoustique.

### ETAT DE LA TECHNIQUE

La spectrométrie photo-acoustique est une technique d'analyse permettant notamment de déterminer la concentration d'un gaz au sein d'un milieu. Elle se base sur l'effet photo-acoustique suivant : lorsqu'un rayonnement lumineux modulé, et en particulier un rayonnement laser, est émis dans un milieu contenant le gaz à analyser, l'espèce constituant le gaz absorbe au moins en partie ce rayonnement si celui-ci présente une longueur d'onde dans la gamme d'absorption de l'espèce, provoquant une excitation des molécules de l'espèce. La relaxation de ces molécules excitées peut avoir lieu de plusieurs manières différentes, et notamment :
a. Par une relaxation radiative provoquant l'émission d'un photon,
b. Par collision avec une autre molécule, provoquant une émission de chaleur, ou bien
c. Par un événement chimique tel qu'un réarrangement de liaison chimique.

L'émission de chaleur due à une collision avec une autre molécule provoque entre autres un phénomène d'expansion et de contraction du gaz, ce qui génère une onde acoustique. L'amplitude de cette onde est proportionnelle à la concentration du gaz au sein du milieu.

L'amplitude de cette onde peut être mesurée à l'aide de différents moyens, et notamment par un capteur mécanique couplé à des moyens de détection capacitifs, un tel système étant couramment désigné système micro-électromécanique résonant, ou en anglais « résonant capacitive microelectromechanical system ». Cependant, les résultats obtenus dans l'art antérieur ne sont pas satisfaisants. En effet, pour maximiser la détection mécanique de l'onde acoustique il est nécessaire d'augmenter la surface de réception de l'onde au niveau du capteur mécanique. Ce faisant, on augmente l'encombrement du système, ce qui est défavorable dans une logique d'optimisation de l'intégration. Par ailleurs, l'air se situant entre le capteur mécanique et l'électrode se trouvant en regard pour permettre la détection capacitive est alternativement aspiré et évacué par le capteur mécanique lors de sa vibration. Cet air constitue un amortisseur visqueux pour le capteur mécanique. Ce phénomène, couramment désigné par le terme anglais de « squeeze film effect » (pouvant être traduit « effet de film gazeux à compression » en français) ne peut être évité et est très désavantageux pour la détection.

Ainsi, les systèmes intégrés de spectrométrie photo-acoustique actuels ne permettent pas d'obtenir des résultats aussi précis que souhaité.

Un objectif de la présente invention est ainsi de proposer une alternative aux systèmes intégrés existants pouvant être utilisés pour la spectrométrie photo-acoustique. De préférence, cette alternative garantit une détection plus précise que les systèmes intégrés existants.

### RESUME

Pour atteindre cet objectif, un premier aspect de l'invention concerne un système opto-mécanique de transduction d'un déplacement en déphasage optique comprenant :
a. un capteur mécanique comprenant un élément senseur, l'élément senseur présentant une face supérieure s'étendant principalement dans un plan dit plan longitudinal lorsque le système est au repos, le capteur mécanique étant destiné à recevoir une onde acoustique pour mettre en vibration l'élément senseur à une fréquence de vibration,
b. un détecteur optique apte à guider un rayonnement lumineux de façon sensiblement parallèle au plan longitudinal, le détecteur optique présentant un champ évanescent.

Le système se caractérise en ce que la vibration de l'élément senseur modifie le champ évanescent du détecteur optique et en ce que l'élément senseur se déplace selon une direction dite direction transversale sensiblement perpendiculaire au plan longitudinal lorsqu'il est en vibration.

Ainsi, la détection de l'amplitude de l'onde acoustique issue de l'excitation d'un gaz se fait à l'aide d'un système de transduction mécano-optique. Le système selon l'invention permet ainsi de s'affranchir des contraintes propres à une détection capacitive évoquées en introduction. Notamment, on peut facilement limiter voire supprimer le squeeze film effect, qui ne pouvait être évité dans le cas d'un système à détection capacitive. Le système permet ainsi une détection précise de la concentration d'un gaz. Le système présente par ailleurs grâce à cela une sensibilité améliorée par rapport aux dispositifs de détection existants. Il permet de détecter des concentrations en gaz très faibles, ce qui est particulièrement avantageux dans certains domaines comme celui de la détection de gaz toxiques.

La présente invention propose ainsi un système de détection précis et sensible, tout en restant compact.

Un deuxième objet de l'invention concerne un spectromètre photo-acoustique comprenant une cavité configurée pour accueillir au moins un gaz, la cavité comprenant :
a. un système opto-mécanique selon le premier aspect de l'invention,
b. une première source de lumière configurée pour injecter un rayonnement de détection dans une entrée du détecteur optique du système opto-mécanique,
c. des moyens de détection aptes à détecter la puissance du rayonnement de détection au niveau d'une sorte du détecteur optique,
d. une deuxième source de lumière pour injecter dans la cavité un rayonnement d'excitation apte à être au moins en partie absorbé par ledit au moins un gaz.

Les avantages du système selon le premier aspect de l'invention s'appliquent mutatis mutandis au spectromètre selon le deuxième aspect de l'invention.

Par ailleurs, l'invention permet de réaliser un spectromètre permettant de détecter plusieurs gaz simultanément, et ce à l'aide d'une unique entrée (une entrée permettant de faire entrer le gaz dans la cavité) et d'une unique sortie (au niveau des moyens de détection).

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente le système selon un mode de réalisation de l'invention dans lequel le détecteur optique comprend un guide d'onde et un résonateur optique et dans lequel l'onde acoustique est reçue par un élément récepteur entraînant l'élément senseur en vibration.
La figure 2 est une vue de dessus d'un système selon le même mode de réalisation que dans la figure 1, comprenant cette fois deux capteurs mécaniques et deux résonateurs optiques.
Les figures 3A et 3B illustrent différentes variantes pour la position de l'élément senseur relativement au détecteur optique.
Les figures 4A et 4B représentent le système selon un mode de réalisation de l'invention dans lequel le détecteur optique comprend un guide d'onde et un résonateur optique et dans lequel l'onde acoustique est reçue par l'élément senseur.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un mode de réalisation avantageux, le capteur mécanique est relié à un substrat, le substrat présentant une face supérieure s'étendant principalement dans un plan parallèle au plan longitudinal et se trouvant en regard du capteur mécanique, le substrat présentant une ouverture le traversant entièrement selon la direction transversale, l'ouverture se trouvant au moins partiellement en regard du capteur mécanique selon la direction transversale.

Selon un exemple, l'élément senseur et le détecteur optique sont disposés côte à côte en projection dans le plan longitudinal.

Selon un exemple, l'élément senseur et le détecteur optique sont disposés l'un en regard de l'autre selon la direction transversale.

Selon un mode de réalisation avantageux, le capteur mécanique comprend un élément récepteur destiné à recevoir l'onde acoustique et à être mis en vibration par l'onde acoustique à la fréquence de vibration, le capteur mécanique étant configuré pour que l'élément récepteur mette en vibration l'élément senseur à la fréquence de vibration lorsqu'il est mis en vibration par l'onde acoustique à la fréquence de vibration.

Selon un exemple, l'élément récepteur et l'élément senseur sont reliés par une jonction, la jonction étant reliée à un substrat.

Selon un exemple avantageux, l'élément senseur comprend une pluralité de poutres en porte-à-faux s'étendant depuis la jonction.

Selon un mode de réalisation avantageux, l'élément récepteur, la jonction et l'élément senseur sont alignés selon une première direction, et lorsque le système est au repos, chacune des poutres présente une première dimension L_{115,X} selon la première direction et une deuxième dimension L_{115,Y} selon une deuxième direction perpendiculaire à la première direction et parallèle au plan longitudinal, avec L_{115,X} > 10*_{L115,Y}, de préférence L_{115,X} > 20*L_{115,Y}. Typiquement, L_{115,X} est comprise entre 20 µm et 100 µm. Typiquement, L_{115,Y} est comprise entre 100 nm et 500 nm.

Selon un exemple préféré, l'élément récepteur, la jonction et l'élément senseur sont alignés selon une première direction, et, lorsque le système est au repos, l'élément senseur présente une première dimension L_{110,X} selon la première direction et une deuxième dimension L_{110,Y} selon une deuxième direction perpendiculaire à la première direction et parallèle au plan longitudinal, avec L_{110,X} ≥ 10*L_{110,Y}, de préférence L_{110,X} ≥ 100*L_{110,Y}.

Selon un exemple préféré, l'élément récepteur, la jonction et l'élément senseur sont alignés selon une première direction, et, lorsque le système est au repos, l'élément senseur présente une première dimension L_{110,X} selon la première direction et l'élément récepteur présente une première dimension L_{120,X} selon la première direction, avec L_{110,X} ≥ 0,42*L_{120,X}.

On peut également définir une deuxième dimension L_{120,Y} de l'élément récepteur selon la deuxième direction. On a alors de préférence L_{110,Y}= L_{120,Y}.

Selon un exemple avantageux, le capteur comprend un deuxième élément senseur séparé de l'élément senseur par l'élément récepteur, le deuxième élément senseur et l'élément récepteur étant reliés par une deuxième jonction, la deuxième jonction étant reliée au substrat par l'intermédiaire de points d'ancrage, le deuxième élément senseur, la deuxième jonction, l'élément récepteur, la jonction et l'élément senseur étant alignés selon la première direction, le système présentant un plan de symétrie perpendiculaire à la première direction, et, lorsque le système est au repos, l'élément senseur et le deuxième élément senseur présentent chacun une première dimension L_{110,X} selon la première direction et le capteur présente une première dimension L_{100,X} selon la première direction, avec : 2L_{110,X}/L_{100,X}≥0,46. On a notamment L_{100,X}=2L_{110,X}+L_{120,X}. On peut noter f_{anch}=2L_{110,X}/L_{100,X}. Ce facteur f_{anch} est représentatif du positionnement de la jonction et de la deuxième jonction, qui séparent l'élément récepteur de l'élément senseur et du deuxième élément senseur. Il a été observé que lorsque f_{anch} ≥0,46, un déplacement important était obtenu aux extrémités des éléments senseurs. Cela permet de maximiser l'effet de la vibration des éléments senseurs sur le champ évanescent et donc d'améliorer la sensibilité de détection.

Selon un mode de réalisation, l'élément senseur est destiné à recevoir directement l'onde acoustique.

Selon un mode de réalisation, l'élément senseur est relié à un substrat par au moins une jonction. Ce substrat ne vibre avantageusement pas lorsque le système reçoit l'onde acoustique. On peut qualifier ce substrat de fixe.

Selon un exemple avantageux, le détecteur optique comprend un résonateur optique et le résonateur optique est au moins en partie logé dans l'ouverture.

Selon un mode de réalisation avantageux du spectromètre, la deuxième source de lumière est une source laser et le rayonnement d'excitation est un rayonnement laser présentant une longueur d'onde principale supérieure à 700 nm.

Selon un mode de réalisation avantageux du spectromètre, la cavité comprend en outre un conduit configuré pour amener l'onde acoustique vers le capteur mécanique. Avantageusement, le conduit est également configuré pour amplifier l'onde acoustique. Il a ainsi une fonction de résonateur acoustique.

Les termes « sensiblement », « environ », « de l'ordre de » signifient, lorsqu'ils se rapportent à une valeur, « à 10% près » de cette valeur ou, lorsqu'ils se rapportent à une orientation angulaire, « à 10° près » de cette orientation. Ainsi, une direction sensiblement normale à un plan signifie une direction présentant un angle de 90±10° par rapport au plan.

On utilisera dans la description détaillée qui suit un repère XYZ représenté sur les figures.

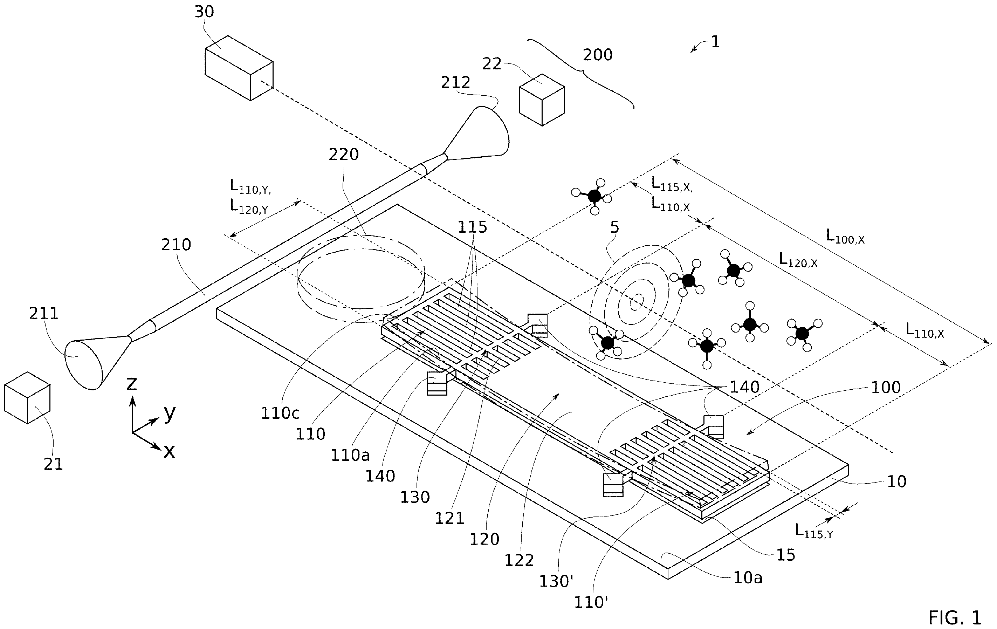

Le système 1 selon différents modes de réalisation de l'invention va maintenant être décrit en référence aux figures 1 à 5.

Les éléments composant le système 1 peuvent être formés dans un même substrat 10 ou bien, pour certains, avoir été déposés sur ce substrat 10. Certains éléments peuvent être formés lors de mêmes étapes de fabrication et être constitués du même matériau, par exemple le silicium ou le poly-silicium. Le substrat 10 peut par exemple comprendre un substrat support 11, typiquement à base de silicium. Une couche d'oxyde enterré 12 et une couche active 13 peuvent recouvrir le substrat support 11, la couche d'oxyde enterré 12 se trouvant entre le substrat support 11 et la couche active 13. Les différents éléments du système 1 décrits plus avant sont avantageusement formés dans la couche active 13 par des procédés classiques de micro-électronique.

Le substrat 10 présente une face supérieure 10a s'étendant principalement selon un plan dit plan longitudinal XY. Le plan longitudinal XY est défini par une première direction X et deuxième direction Y perpendiculaire entre elles.

Le système 1 comprend un capteur mécanique 100 et un détecteur optique 200.

Le capteur mécanique 100 est destiné à recevoir une onde acoustique 5 de sorte à être mis en vibration par cette onde acoustique 5 à une fréquence de vibration.

Les caractéristiques structurelles (dimensionnement, matériaux...) du capteur mécanique 100 sont telles que ce dernier est apte à être mis en vibration dans une plage de fréquences. Typiquement, le capteur mécanique 100 est apte à vibrer dans une plage de fréquences comprenant une fréquence de résonance correspondant à un gaz donné. L'homme du métier maîtrise parfaitement la façon dont réaliser un tel capteur pour qu'il puisse vibrer à une fréquence précise, ou du moins dans une plage de fréquences comprenant cette fréquence, et de préférence centrée autour de cette fréquence. Ainsi, on peut par exemple concevoir le capteur mécanique 100 de façon à ce qu'il soit apte à vibrer dans une plage de fréquences comprenant une fréquence de résonance f_{CO2} ou f_{NH3}, et de préférence apte à vibrer à une fréquence sensiblement égale à f_{CO2} ou f_{NH3}, correspondant respectivement aux fréquences des ondes acoustiques émises suite à l'excitation de CO₂ et de NH₃. L'amplitude de vibration du capteur mécanique 100 correspondra alors à la concentration en CO₂ ou en NH₃, respectivement. Il est à noter que les fréquences f_{CO2} ou f_{NH3} sont dépendantes du temps de relaxation thermique du CO2 et du NH3, respectivement, lorsque ces gaz sont excités par le rayonnement d'excitation. Ces gaz sont donnés à titre d'exemples, mais il est entendu que ces explications sont valables pour n'importe quel gaz. Il est entendu que, bien que le capteur mécanique 100 soit dimensionné pour pouvoir vibrer à la fréquence de résonance correspondant à une molécule donnée, la fréquence de vibration effective du capteur mécanique 100 peut ne pas être exactement cette fréquence de résonance. Le système 1 sera tout de même fonctionnel.

Le capteur mécanique 100 comprend un élément senseur 110 qui, lorsque le capteur mécanique 100 reçoit l'onde acoustique 5, est mis en vibration à la fréquence de résonance. L'élément senseur 110 peut directement recevoir l'onde acoustique 5 ou bien être mis en vibration par l'intermédiaire d'une région distincte ayant reçu cette onde acoustique 5 et faisant partie du capteur mécanique 100. Ces deux variantes seront envisagées plus en détails dans le cadre de modes de réalisation décrits plus avant.

L'élément senseur 110 présente une face supérieure 110a qui, lorsque le système 1 est au repos, s'étend principalement dans le plan longitudinal XY. On entend que le système 1 est au repos lorsqu'il ne se trouve pas en vibration du fait de la réception d'une onde acoustique 5. Il est alors immobile relativement au substrat 10.

Les paragraphes suivants s'attachent à décrire le détecteur optique 200.

Le détecteur optique 200 comprend typiquement un guide d'onde 210, classiquement linéaire, et un résonateur optique 220, par exemple en forme d'anneau - on parle alors d'anneau optique -, de disque ou plus généralement de « race track » (pouvant être traduit en français par le terme « circuit »). Le guide d'onde 210 et le résonateur optique 220 sont couplés par un couplage évanescent.

Le guide d'onde 210 comprend une entrée 211 et une sortie 212 entre lesquelles, lorsque le système est en fonctionnement, est diffusé un rayonnement lumineux, typiquement un rayonnement laser, dit rayonnement de détection. Le couplage entre le guide d'onde 210 et le résonateur optique 220 est tel qu'au moins une partie du rayonnement de détection est injectée dans le résonateur optique 220 puis collectée à nouveau par le guide d'onde 210. La vibration de l'élément senseur 110 à proximité du résonateur optique 220 provoque une modification de l'indice optique effectif de ce dernier et donc perturbe le rayonnement de détection passant dans le résonateur optique 220.

Afin de permettre la détection de la vibration de l'élément senseur 110 par le détecteur optique 200, le résonateur optique 220 et l'élément senseur 110 sont positionnés de sorte à ce qu'au moins une partie de l'élément senseur 110 se trouve dans le champ évanescent du résonateur optique 220. La distance entre l'élément senseur 110 et le résonateur optique 220 peut par exemple être de l'ordre de 100 nm. Par ailleurs, la disposition relative du résonateur optique 220 et de l'élément senseur 110 est telle que lorsque l'élément senseur 110 est en vibration, la distance entre ces deux éléments varie et l'élément senseur 110 reste dans le champ évanescent du résonateur optique 220.

Le détecteur optique 200 comprend par ailleurs des moyens permettant de détecter la puissance du rayonnement lumineux au niveau de la sortie 212 du guide d'onde 210. Cette puissance est proportionnelle au déplacement de l'élément senseur 110. L'analyse de l'évolution de cette puissance permet ainsi de déterminer l'amplitude de la vibration de l'élément senseur 110 et ses évolutions, donc l'amplitude de l'onde acoustique et donc de déterminer la concentration de l'espèce gazeuse étudiée dans le milieu.

Les moyens de détection de la puissance du rayonnement lumineux peuvent par exemple comprendre un spectromètre, un photodétecteur telle qu'une photodiode, ou bien un laser externe et des moyens de détection interférométriques.

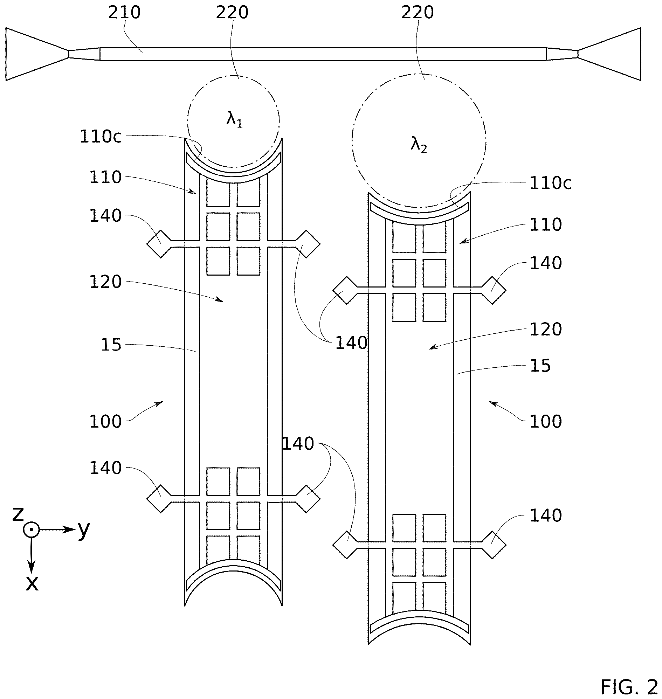

Un premier mode de réalisation du système 1 va maintenant être décrit en référence aux figures 1 et 2. Il est entendu que sur la figure 2 apparaissent deux capteurs mécaniques 100, mais que le système 1 peut parfaitement comprendre un unique capteur mécanique 100, comme sur la figure 1, ou plus de deux capteurs mécaniques 100.

Le système 1 comprend un détecteur optique 200 tel que décrit plus haut.

Dans ce premier mode de réalisation, le capteur mécanique 100 comprend un élément récepteur 120 destiné à recevoir l'onde acoustique 5 et à être mis en vibration par cette onde acoustique 5 à la fréquence de résonance. Cet élément récepteur 120 est configuré pour, lorsqu'il se trouve en vibration, mettre en vibration l'élément senseur 110.

Ainsi, l'élément récepteur 120 et l'élément senseur 110 sont couplés mécaniquement. Par exemple, ils peuvent être reliés par une jonction 130 elle-même reliée au substrat 10. La position de la jonction 130 définit le couplage entre l'élément récepteur 120 et l'élément senseur 110. La jonction 130 peut être une poutre reliée à chacune de ses deux extrémités à des points d'ancrage 140. La poutre s'étend de préférence principalement selon un axe parallèle à la deuxième direction Y, dit axe de couplage. La poutre présente la capacité de se déformer en torsion autour de l'axe de couplage.

Selon un exemple avantageux, les caractéristiques de l'élément senseur 110, comme par exemple sa longueur L_{110,X} selon la première direction X, celles de l'élément récepteur 120 et celles de la jonction 130 sont telles que ces trois éléments 110, 120, 130 forment ensemble un mécanisme d'amplification de la vibration mécanique faisant que l'amplitude de mouvement au niveau du flanc 110c de l'élément senseur 110 est supérieure à l'amplitude de mouvement au niveau de la région principale 122 de l'élément récepteur 120. Une telle amplification est notamment permise par un phénomène de bras de levier.

Selon une variante, afin de permettre un bon couplage mécanique entre l'élément récepteur 120 et l'élément senseur 110, l'élément récepteur 120 présente de préférence une région ajourée 121 adjacente à la jonction 130 en projection dans le plan longitudinal XY. Plus précisément, c'est au niveau de la région ajourée 121 que l'élément récepteur 120 est relié à la jonction 130. La région ajourée 121 comprend de préférence une pluralité de poutres, chacune étant fixée à une extrémité à la jonction 130.

L'élément récepteur 120 comprend de préférence une région principale 122 pleine, c'est-à-dire n'étant pas ajourée. En projection dans le plan longitudinal XY lorsque le système 1 est au repos, l'élément récepteur 120 présente un contour fermé définissant une surface Sₜₒₜ et la région principale 122 présente une superficie S₁₂₂. De préférence, S₁₂₂≥0,5*S_{tot,} et de préférence S₁₂₂≥0,9*Sₜₒₜ. La présence d'une région pleine permet de favoriser la mise en vibration de l'élément récepteur 120 par l'onde acoustique 5.

Selon une variante préférée, l'élément récepteur 120 ne comprend pas de région ajourée 121 et est uniquement formée de la région principale 122 pleine. Cela permet de maximiser l'interaction mécano-acoustique entre l'élément récepteur et l'onde acoustique 5.

De préférence, lors que le système 1 est au repos, l'élément récepteur 120 et l'élément senseur 110 se trouvent dans le prolongement l'un de l'autre selon le plan longitudinal XY.

Afin de permettre un bon couplage mécanique entre l'élément récepteur 120 et l'élément senseur 110 et une bonne mobilité de l'élément senseur 110, l'élément senseur 110 est de préférence ajouré et présente ainsi des ouvertures traversantes selon la direction transversale Z. Typiquement, l'élément senseur 110 comprend une pluralité de poutres 115, par exemple trois, s'étendant depuis la jonction 130. Ces poutres s'étendent de préférence principalement selon la première direction X, perpendiculairement à la direction principale de la jonction 130. Les poutres 115 peuvent également être reliées les unes aux autres par des poutres transversales, comme illustré en figure 2. De telles poutres transversales permettent d'augmenter la rigidité de l'élément senseur 110 et de limiter le nombre de modes de vibration indésirables voire les supprimer.

Selon une autre variante, l'élément senseur 110 est constitué d'une unique poutre s'étendant de préférence principalement selon la première direction X.

Selon un mode de réalisation, le capteur mécanique 100 comprend un unique élément senseur 110.

Selon un autre mode de réalisation, comme illustré sur la figure 1, le capteur mécanique 100 peut présenter un plan de symétrie perpendiculaire au plan longitudinal XY et comprenant la deuxième direction Y. Ce plan de symétrie intersecte notamment l'élément récepteur 120. Ainsi, typiquement, le capteur mécanique 100 comprend une deuxième jonction 130' et un deuxième élément senseur 110'. La jonction 130 et l'élément senseur 110 d'une part et la deuxième jonction 130' et le deuxième élément senseur 110' d'autre part sont situés de part et d'autre de l'élément récepteur 120. Ces éléments se trouvent de préférence dans la continuité les uns des autres selon la première direction X lorsque le système 1 est au repos.

Il est entendu que bien que le deuxième élément senseur 110 présente toutes les caractéristiques de l'élément senseur 110, il n'est pas nécessaire de l'associer à un détecteur optique. Une lecture de la vibration du capteur mécanique 100 au niveau de l'élément senseur 110 suffit à elle seule à remonter à l'amplitude de vibration et à la concentration du gaz analysé. On prévoit cependant la possibilité d'inclure au système 1 un deuxième détecteur optique associé au deuxième élément senseur 110. La présence de deux détecteurs optiques peut en effet être avantageuse.

Comme cela est également illustré sur la figure 1, le capteur mécanique 100 présente avantageusement un plan de symétrie perpendiculaire au plan longitudinal XY et comprenant la première direction X. Cela permet un bon équilibre du capteur mécanique 100 et ainsi une meilleure détection de l'amplitude de vibration.

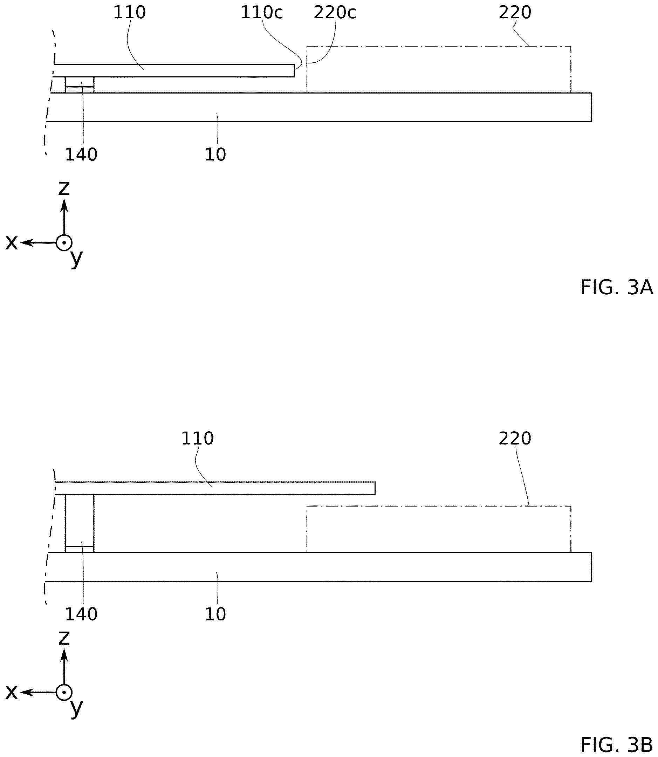

L'élément senseur 110 peut être positionné de façons différentes relativement au résonateur optique 220, comme illustré aux figures 3A et 3B.

Selon un premier exemple illustré à la figure 3A, en projection dans le plan longitudinal XY, l'élément senseur 110 et le résonateur optique 220 se trouvent côte à côte. L'élément senseur 110 présente alors un flanc 110c en regard d'une face d'interaction 220c du résonateur optique 220. Avantageusement, et comme illustré à la figure 2, le flanc 110c de l'élément senseur 110 se trouvant en regard du résonateur optique 220 présente une forme complémentaire à ce dernier. Cela permet de maximiser l'interaction mécano-optique entre la masse mobile 110 et le détecteur optique 200. Par exemple, lorsque le résonateur optique 220 est un anneau optique et présente donc une forme de couronne en projection dans le plan longitudinal XY, on prévoit avantageusement que l'élément senseur 110 présente une forme concave vers le résonateur optique 220, c'est-à-dire au niveau de son flanc 110c.

Selon un deuxième exemple illustré à la figure 3B, l'élément senseur 110 et le résonateur optique 220 se trouvent en regard l'un de l'autre selon la direction transversale Z. Ainsi, en projection dans le plan longitudinal XY, l'image de l'un se projette sur l'image de l'autre. Ce mode de réalisation permet de maximiser l'amplitude de la distance entre l'élément senseur 110 et le résonateur optique 220 lors de la vibration de l'élément senseur 110. Cela permet de maximiser l'effet de la vibration sur le champ évanescent et par conséquence l'effet opto-mécanique. Le signal de sortie s'en retrouve plus important, et la sensibilité de détection est donc améliorée.

Dans ce mode de réalisation illustré à la figure 3B, le résonateur optique est avantageusement un cristal photonique. Un résonateur de ce type présente un champ évanescent très concentré hors plan (c'est-à-dire ici selon la direction transversale Z). Par ailleurs, la taille de la résonance optique d'un cristal photonique est comparable aux valeurs typiques pouvant être données à la largeur de la poutre formant l'élément senseur 100 (typiquement entre 200 nm et 1 µm). Le système 1 s'en retrouve plus sensible que dans le cas d'un résonateur optique sous forme de disque ou d'anneau.

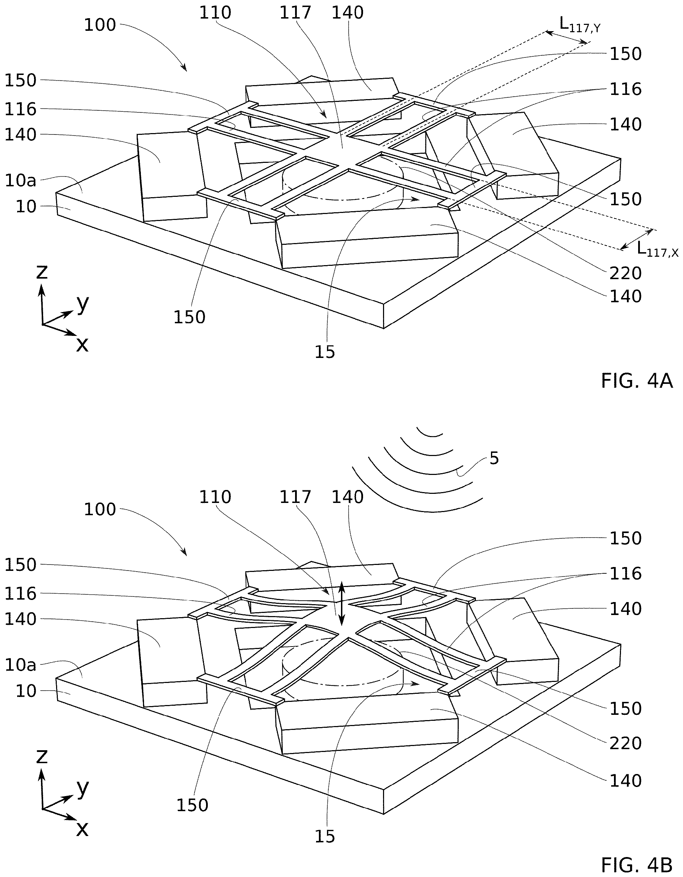

Un deuxième mode de réalisation du système 1 va maintenant être décrit en référence aux figures 4A et 4B.

Le système 1 comprend un détecteur optique 200 tel que décrit plus haut.

Dans ce deuxième mode de réalisation, l'onde acoustique 5 est directement reçue par l'élément senseur 110. Ce dernier est donc directement mis en vibration à la fréquence de résonance.

L'élément senseur 110 est avantageusement relié au substrat 10 par l'intermédiaire de points d'ancrage 140. Dans l'exemple illustré, l'élément senseur 110 est relié aux points d'ancrage 140 par l'intermédiaire de jonctions 150, typiquement des poutres. Chaque jonction 150 est reliée à chacune de ses extrémités à un point d'ancrage 140, selon un axe de couplage propre à ladite jonction 150. Chaque jonction 150 présente la capacité de se déformer en torsion autour de son axe de couplage.

Afin de permettre une bonne déformation mécanique de l'élément senseur 110 lorsqu'il reçoit l'onde acoustique 5, ce dernier est de préférence ajouré et présente ainsi des ouvertures traversantes selon la direction transversale Z. Typiquement, l'élément senseur 110 comprend une pluralité de poutres 116 s'étendant entre les jonctions 150 et une région centrale 117 de l'élément senseur 110.

Dans l'exemple avantageux illustré aux figures 4A et 4B, la région centrale 117 présente une forme rectangulaire, de préférence carrée, en projection dans le plan longitudinal XY lorsque le système 1 est au repos. En projection dans le plan longitudinal XY et lorsque le système 1 est au repos, la région centrale 117 présente des dimensions L_{117,X} et L_{117,Y} prises respectivement selon la deuxième direction X et selon la direction d'excitation Y. L_{117,X} et L_{117,Y} sont typiquement chacune comprise entre 1 µm et 1000 µm.

Le système 1 comprend quatre points d'ancrage 140 et quatre jonctions 150 s'étendant chacune entre deux points d'ancrage 140. Chaque axe de couplage des jonctions 150 est de préférence sensiblement parallèle à un côté de la région centrale 117. L'élément senseur 110 comprend huit poutres 116 le reliant aux jonctions 150. Deux poutres 116 relient chaque côté de la région centrale 117 à la jonction 150 se trouvant en regard lorsque le système 1 est au repos. Les poutres 116 peuvent chacune présenter une longueur comprise entre 50 nm et 20 µm, cette longueur étant mesurée selon la première direction X ou la deuxième direction Y en fonction de l'orientation de la poutre 116.

Dans ce mode de réalisation, le capteur 100 peut présenter une largeur comprise entre 3 µm et 5000 µm.

Comme illustré sur les figures 4A et 4B, le capteur mécanique 100 présente avantageusement un plan de symétrie perpendiculaire au plan longitudinal XY et comprenant la deuxième direction Y. Comme cela est également illustré sur les figures 4A et 4B, le capteur mécanique 100 présente avantageusement un plan de symétrie perpendiculaire au plan longitudinal XY et comprenant la première direction X. Ces symétries sont avantageuses pour la mise en résonance du capteur mécanique 100. Elles le sont également pour atténuer les modes de vibration non désirés.

Les figures 4A et 4B illustre un exemple particulier de réalisation de l'élément senseur 110, mais il est entendu que sa structure peut être différente, notamment l'élément senseur 110 pourrait comprendre un autre nombre de poutres 116.

Dans le mode de réalisation illustré aux figures 4A et 4B, le résonateur optique est avantageusement un cristal photonique. Un cristal photonique peut en effet présenter de faibles dimensions, ce qui contribue à la réduction des pertes visqueuses.

Dans chacun des modes de réalisation du système 1 décrits précédemment, il est possible de prévoir la présence d'une ouverture 15 dans le substrat 10 sous le capteur mécanique 100. Ainsi, en projection dans le plan longitudinal XY, l'image de l'un se projette sur l'image de l'autre.

Cette ouverture 15 se situe de préférence, selon la direction transversale Z, au moins en partie sous la zone du capteur mécanique 100 recevant l'onde acoustique. Ainsi, dans le mode de réalisation décrit en référence à la figure 2, l'ouverture se situe de préférence au moins en partie sous l'élément récepteur 120. De préférence, l'ouverture 15 est sous-jacente à l'intégralité de l'élément récepteur 120. Avantageusement, toujours dans ce mode de réalisation illustré à la figure 2, l'ouverture 15 s'étend également sous au moins une partie et de préférence l'intégralité de l'élément senseur 110. Dans le mode de réalisation décrit en référence aux figures 4A et 4B, l'ouverture se situe de préférence au moins en partie sous l'élément senseur 110. De préférence, l'ouverture 15 est sous-jacente à l'intégralité de l'élément senseur 110.

La présence d'une telle ouverture permet de réduire l'atténuation de la vibration du capteur mécanique 100, et ainsi de maximiser la détection de l'onde acoustique par le système. Elle permet notamment d'éviter que se forme un film d'air entre le substrat et le capteur mécanique 100, un tel film d'air provoquant un amortissement visqueux non souhaitable.

Dans le cas du mode de réalisation décrit en référence aux figures 4A et 4B, cette ouverture 15 accommode avantageusement le résonateur optique 220 du détecteur optique 200. Cela permet de rendre le système à la fois plus compact et plus robuste.

Selon un exemple pouvant être appliqué à tous les modes de réalisation décrits précédemment, le capteur mécanique 100 peut être formé d'une membrane non résonante, par exemple en graphène, couplé à un résonateur acoustique.

### Système de détection à plusieurs masses mobiles

Selon un mode de réalisation avantageux, le système selon l'invention peut comprendre une pluralité de capteurs mécaniques 100, chaque capteur mécanique 100 étant placé de façon à modifier un champ évanescent du détecteur optique 200.

Le système 1 comprend alors avantageusement autant de résonateurs optiques 220, tous couplés avec le guide d'onde 210, que de capteurs mécaniques 100. Chaque capteur mécanique 100 peut alors être associé à un résonateur optique 220 pour la détection d'une fréquence de vibration différente (voir figure 2), ou bien tous les capteurs mécaniques 100 peuvent être associés à un même résonateur optique 220. Les capteurs mécaniques 100 présentent des dimensions différentes les uns des autres afin d'être chacun apte à être mis en vibration à une fréquence de vibration distincte.

Quel que soit le mode de réalisation choisi, un système présentant plusieurs capteurs mécaniques permet de détecter simultanément plusieurs types de gaz.

### Spectromètre photo-acoustique comprenant un système selon l'invention

Un autre objet de l'invention concerne un spectromètre photo-acoustique comprenant un système de détection tel que décrit précédemment.

Le système 1 peut en effet être disposé au sein d'une cavité 2 pouvant accueillir une ou plusieurs gaz à analyser (voir figure 1).

La cavité 2 comprend alors par ailleurs une première source de lumière 21 permettent d'injecter un rayonnement dit de détection dans une entrée 211 du détecteur optique 200, ainsi que des moyens de détection 22 du rayonnement en sortie 212 du détecteur optique 200.

La cavité 2 comprend également une deuxième source de lumière 30 destinée à injecter dans la cavité 2 un rayonnement dit d'excitation permettant d'exciter le ou les gaz contenu(s) dans la cavité 2. La deuxième source de lumière 30 est typiquement une source laser modulable. Le caractère modulable de la source permet en effet de scanner le gaz à analyser dans une plage comprise dans sa gamme d'absorption, typiquement dans un pic d'absorption.

Le rayonnement d'excitation, typiquement le laser d'excitation, présente avantageusement une largeur spectrale plus réduite que la gamme d'absorption du gaz à analyser. Par ailleurs, plus le laser présente une intensité importante, plus de relaxations de molécules composant ce gaz seront détectées et donc plus le signal de sortie sera important.

Le rayonnement ou laser d'excitation présente généralement une longueur d'onde principale comprise dans l'infrarouge, typiquement entre 1 µm et 20 µm. Dans cette plage en effet la plupart des molécules présente une unique raie d'absorption, ce qui est avantageux pour l'analyse du signal de sortie.

La figure 1 illustre un mode de réalisation du spectromètre dans lequel la première source de lumière 21 et la deuxième source de lumière 30 sont distinctes. Il est cependant envisageable, selon une autre variante, que ces deux sources 21, 30 soient en réalité une seule et même source. Dans cette variante, le rayonnement serait parallèle à deuxième direction Y. Quelle que soit la variante choisie, le rayonnement devra être focalisé à l'aplomb, selon la direction Z, de l'élément récepteur 120, et de préférence à l'aplomb du centre de la région principale 122.

Selon un exemple, on prévoit que les ondes acoustiques soient conduites vers le capteur mécanique 100 (vers l'élément récepteur 120 ou vers l'élément senseur 110, selon le mode de réalisation) par un conduit. Dans le cas d'un système comprenant plusieurs capteurs mécaniques 100, on prévoit la présence de plusieurs conduits ou bien d'un conduit présentant une ouverture en regard de chaque capteur mécanique 100. Les différents conduits - ou l'unique conduit - guideront et amplifieront alors des ondes acoustiques générées par des lasers présentant des longueurs d'onde principales distinctes.

L'utilisation d'un conduit pour mener les ondes acoustiques vers le l'élément récepteur 120 ou directement vers l'élément senseur 110 est notamment avantageuse lorsque ce dernier présente de faibles dimensions. Le conduit permet alors de focaliser l'onde vers l'élément récepteur et maximiser l'interaction mécano-acoustique. Le choix d'avoir recours ou non à un conduit se fait donc principalement en fonction des dimensions de l'élément récepteur 120 ou de l'élément senseur 110.

L'invention n'est pas limitée aux modes de réalisations précédemment décrits et s'étend à tous les modes de réalisation couverts par l'invention.

## Revendications

1. Système opto-mécanique (1) de transduction d'un déplacement en déphasage optique comprenant :
• un capteur mécanique (100) comprenant un élément senseur (110), l'élément senseur (110) présentant une face supérieure (110a) s'étendant principalement dans un plan dit plan longitudinal (XY) lorsque le système (1) est au repos, le capteur mécanique (100) étant destiné à recevoir une onde acoustique pour mettre en vibration l'élément senseur (110) à une fréquence de vibration,
• un détecteur optique (200) apte à guider un rayonnement lumineux de façon sensiblement parallèle au plan longitudinal (XY), le détecteur optique (200) présentant un champ évanescent,
**caractérisé en ce que** la vibration de l'élément senseur (110) modifie le champ évanescent du détecteur optique (200) et **en ce que** l'élément senseur (110) se déplace selon une direction dite direction transversale (Z) sensiblement perpendiculaire au plan longitudinal (XY) lorsqu'il est en vibration, le capteur mécanique (100) comprenant en outre un élément récepteur (120) destiné à recevoir l'onde acoustique et à être mis en vibration par l'onde acoustique à la fréquence de vibration, le capteur mécanique (100) étant configuré pour que l'élément récepteur (120) mette en vibration l'élément senseur (110) à la fréquence de vibration lorsqu'il est mis en vibration par l'onde acoustique à la fréquence de vibration, l'élément récepteur (120) et l'élément senseur (110) étant reliés par une jonction (130), la jonction (130) étant reliée à un substrat (10) par l'intermédiaire de points d'ancrage (140).

2. Système (1) selon la revendication précédente dans lequel le substrat (10) présente une face supérieure (10a) s'étendant principalement dans un plan parallèle au plan longitudinal (XY) et se trouvant en regard du capteur mécanique (100), le substrat (10) présentant une ouverture (15) le traversant entièrement selon la direction transversale (Z), l'ouverture (15) se trouvant au moins partiellement en regard du capteur mécanique (100) selon la direction transversale (Z).

3. Système (1) selon l'une quelconque des revendications précédentes dans lequel l'élément senseur (110) et le détecteur optique (200) sont disposés côte à côte en projection dans le plan longitudinal (XY).

4. Système (1) selon l'une quelconque des revendications 1 et 2 dans lequel l'élément senseur (110) et le détecteur optique (200) sont disposés l'un en regard de l'autre selon la direction transversale (Z).

5. Système (1) selon l'une quelconque des revendications précédentes dans lequel l'élément récepteur (120), la jonction (130) et l'élément senseur (110) sont alignés selon une première direction (X), et dans lequel, lorsque le système (1) est au repos, l'élément senseur (110) présente une première dimension L_{110,X} selon la première direction (X) et l'élément récepteur (120) présente une première dimension L_{120,X} selon la première direction (X), avec L_{110,X} ? 0,42*L,_{120,X}.

6. Système (1) selon l'une quelconque des revendications précédentes dans lequel le capteur (10) comprend un deuxième élément senseur (110') séparé de l'élément senseur (110) par l'élément récepteur (120), le deuxième élément senseur (110') et l'élément récepteur (120) étant reliés par une deuxième jonction (130'), la deuxième jonction (130') étant reliée au substrat (10) par l'intermédiaire de points d'ancrage (140), le deuxième élément senseur (110'), la deuxième jonction (130'), l'élément récepteur (120), la jonction (130) et l'élément senseur (110) étant alignés selon la première direction (X), le système (1) présentant un plan de symétrie perpendiculaire à la première direction (X), et, lorsque le système (1) est au repos, l'élément senseur (110) et le deuxième élément senseur (110') présentent chacun une première dimension L_{110,X} selon la première direction (X) et le capteur (100) présente une première dimension L_{100,X} selon la première direction (X), avec : 2L_{110,X}/L_{100,X}≥0,46.

7. Spectromètre photo-acoustique comprenant une cavité configurée pour accueillir au moins un gaz, la cavité comprenant :
• un système opto-mécanique (1) selon l'une quelconque des revendications précédentes,
• une première source de lumière (21) configurée pour injecter un rayonnement de détection dans une entrée (211) du détecteur optique (200) du système opto-mécanique (1),
• des moyens de détection (22) aptes à détecter la puissance du rayonnement de détection au niveau d'une sorte (212) du détecteur optique (200),
• une deuxième source de lumière (30) pour injecter dans la cavité un rayonnement d'excitation apte à être au moins en partie absorbé par ledit au moins un gaz.

8. Spectromètre photo-acoustique selon la revendication précédente dans lequel la deuxième source de lumière est une source laser et dans lequel le rayonnement d'excitation est un rayonnement laser présentant une longueur d'onde principale supérieure à 700 nm.

9. Spectromètre photo-acoustique selon l'une quelconque des revendications 7 et 8 dans lequel la cavité comprend en outre un conduit configuré pour amener l'onde acoustique vers le capteur mécanique (110).
